# EUROPEAN PATENT APPLICATION

(11) **EP 2 014 587 A2**
(43) Date of publication of application: **14.01.2009**
(21) Application number: 08007900.7
(22) Date of filing: 24.04.2008
(51) Int. Cl.: B65G 47/91, A47L 15/42, D06F 37/28

(54) **Vacuum-based item-holding device**

(30) Priority: 07.06.2007 IT TO20070074
(71) Applicant: CO-MATIC S.a.s. di Cavallari Ivan & C., 10143 Torino (IT)
(72) Inventor: Cavallari, Enrico, 10036 Settimo Torinese (TO) (IT)
(74) Representative: Spandonari, Carlo

(57) **Abstract**

A beam (12) is provided with a longitudinal channel closed at its ends (14), with a first base (12L) having a plurality of holes (23) open to the longitudinal channel (14), and with an opening (A) which also is open to the longitudinal channel (14) and to which means (E) for extracting air from the channel are connectable. A mousse-holding plate (40) is applied to the base of the beam (12) and is perforated with holes facing the holes (23) in the first base (12L). A mat of a synthetic material is glued to the mousse-holding plate (40) and is provided with holes (45) aligned to the holes in the mousse-holding plate (40).

## Description

The present invention relates to item-holding devices connectable to handling machines, such as anthropomorphic robots or multi-axis cranes which are arranged, e.g., at the end of a machining line for carrying out operations such as palletization, de-palletization, packaging, and the like, and more particularly to devices using the vacuum for retaining the item.

The above devices are used in lieu of traditional mechanical holding devices using pliers for handling items of various types and sizes, such as pallets, rigid or semirigid packages, boxes, glasses, burdens, bricks, metal plates, wood boards or planks, and the like. Such devices typically comprise a hollow platform having a sealed chamber defined therein, which is connected to a vacuum generator driven, e.g., by a pump. The platform is provided of a plurality of suction cups at its lower surface, which are in communication with the chamber and by which the item is held and retained.

For a more uniform and regular grip, in the last years devices have spread which make use of a perforated mat or "mousse" made of a synthetic material in lieu of the suction cups. The mat is glued to the base of the platform, which is correspondingly perforated with holes facing the holes in the mousse.

The known devices must necessarily be manufactured in various sizes in order that they may hold items having different shapes and sizes.

It is a main object of the invention to provide an item-holding device having a higher flexibility in relation to the different, possible shapes and sizes of the items.

Moreover, the mousse must be periodically replaced due to the wear. However, this replacement is an awkward operation because, firstly, the weared mousse must be detached from the base of the platform, then the latter must be cleaned from the residuals of glue and made smooth again in order that the new mousse may perfectly stick to its surface, and finally the new mousse must be glued, thereby resulting in rather long operative-and-down times.

Therefore, it is a further object of the invention to provide a device in which the mousse-replacement/mainteinance operations are easier to carry out.

Furthermore, with the known devices not only the base but also the other walls of the platform are perforated, e.g., for fastening the device to the handling machine or for connecting auxiliary devices. Although these holes are usually sealed, however they may cause localized leakages.

Therefore, it is another object of the invention to provide a device as above in which the number of possible sources of localized leaks is minimuzed, in order to enhance the effectiveness and safety of the holding action applied to the item.

The above objects and other advantages, which will better result from the following description, are achieved by the item-holding device having the features recited in claim 1, while the dependent claims state other advantageous, though secondary features of the invention.

The invention will be now described in more detail with reference to a preferred, non-exclusive embodiment shown by way of non-limiting example in the attached drawings, wherein:
Fig. 1 is a plan view of the device according to the invention;
Fig. 2 is a view in cross-section along line II-II of the device of Fig. 1;
Fig. 3 is a view in cross-section along line III-III of the device of Fig. 1;
Fig. 4 is a view in longitudinal cross-section of an isolated part of the device of Fig. 1;
Fig. 5 shows a portion of the device according to the invention during an operating step;
Figs. 6, 7 show two possible applications of the device according to the invention.

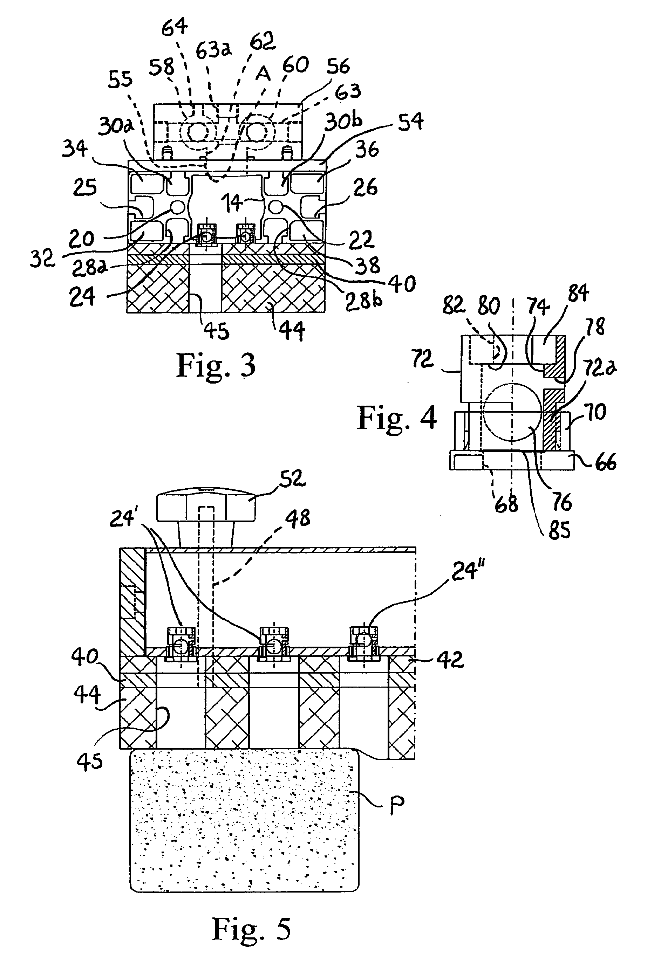

With reference to the above Figures, an item-holding device 10 according to the present invention comprises an aluminum beam 12 having a substantially rectangular external profile and a central, longitudinal channel 14 which has a substantially square profile and is closed at its opposite ends by respective plates 16, 18, with interposition of airtight seals 16a, 18a. Each of plates 16, 18 is fastened to the respective end of beam 12 by a pair of screws (not shown) engaging a pair of corresponding holes 20, 22 which longitudinally extend through the beam at the opposite sides of middle channel 14. Accordingly, central channel 14 closed by plates 16, 18 defines an airtight chamber extending through the whole length of the beam. Beam 12 has a lower base 12L provided with two longitudinal, mutually offset rows of equally-spaced holes such as 23. Each hole has a valve 24 installed therein, which will be described in more detail below. The beam has an upper base 12U having a central opening A (Fig. 3).

A longitudinal groove 25, 26 with internally hanging edges is formed on each of the opposite sides of the beam; the lower base and the upper base of the beam are also provided with a pair of lower longitudinal grooves 28a, 28b and with a pair of upper longitudinal grooves 30a, 30b respectively, which have the same profile as lateral, longitudinal grooves 25, 26. Corner portions defined between the lateral grooves and the upper/lower grooves of the profile are provided with lightening holes 32, 34, 36, 38.

An aluminum mousse-holding plate 40 is fastened to the lower base of beam 12, with interposition of a seal 42 made of a conjugated, ethylene-propylene-dyene monomer material (EPDM), and has a rectangular profile matching with the base of the beam. Both mousse-holding plate 40 and seal 42 are correspondingly perforated with holes facing holes 23 in the lower base of beam 12. A mat or mousse 44 made of EPDM is glued to mousse-holding plate 40 and is also provided with corresponding holes such as 45 facing the holes in mousse-holding plate 40, in seal 42 and in the base of beam 12. Mousse 44 is of the type with semi-closed cells which is used in the automotive field as a noise damper, and has the feature that it has a certain porosity at rest, but it becomes substantially airtight when subjected to a slight compression.

The assembly comprising beam 12, seal 42, as well as mousse-holding plate 40 with mousse 44 glued thereto, is sandwiched at each end of beam 12 by a pair of threaded tie-rods 46, 48 having respective threaded knobs 50, 52 tightened thereto. The tie-rods pass through beam 12 externally to the chamber so that the seal of the latter is not affected, as well as through the seal and the mousse-holding plate.

A connection plate 54 is fastened to the upper base of beam 12 and has a middle hole 55 aligned to opening A on the upper base of beam 12. A connection box 56 is attached to beam 12 via connection plate 54. The connection box has two side-by-side cylindrical cavities 58, 60 parallel to the longitudinal direction of the beam. Both cavities are in communication with the interior of the chamber via a hole 62 which is formed in the base of the box and is aligned to hole 55 in the connection plate.

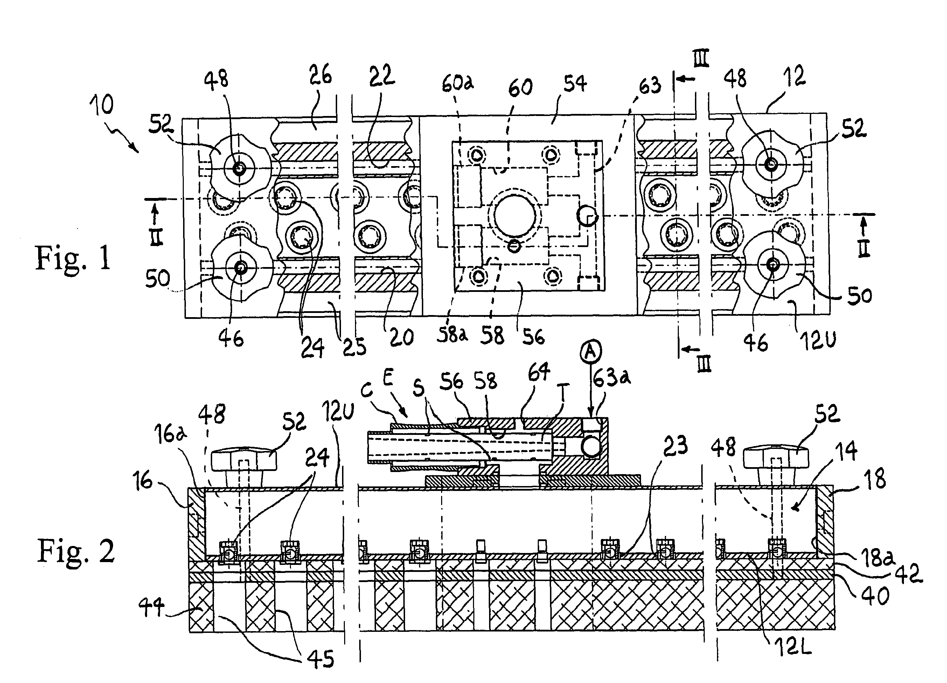

Each of cavities 58, 60 is engageable by an ejector E (for better clarity of illustration, one ejector is diagrammatically shown in Fig. 2 only) of the type described in WO 99/49216 and dealed in by PIAB AB with the trade name COAXTM, in order to generate the vacuum within cavities 58, 60. Ejectors E each substantially comprise a tubular member T which is inserted into the cavity and has a plurality of narrow sections, or "Venturi stages", which are open to the respective cavity via lateral grooves such as S, as shown in detail in the above-cited PCT application. Tubular member T is partially received within a cylindrical housing C that is screwed to an inlet 58a, 60a of the respective cavity. Each cavity 58, 60 extends from the respective inlet 58a, 60a open to the outside to a transverse, through channel 63. The latter is closed at its opposite ends by respective plugs (not shown) and has a vertical branch 63a open to the upper surface of connection box 56 for connection to a pump A (only diagrammatically shown in Fig. 2). A vertical hole 64 extends from one of the cavities, 58, to the outside, for connection of a vacuum meter (not shown).

Having now particular reference to Fig. 4, each valve 24 comprises a base 66 having a circular profile with a central opening 68. An internally threaded cilindrical seat 70 rises from base 66 and surrounds opening 68. A valve housing 72 having a substantially cylindrical profile and provided with a threaded end 72a is screwed into cylindrical seat 70 of the base. Valve housing 72 has an axial cavity 74 in which a ball is slidable, and a by-pass radial hole 78 via which axial cavity 74 communicates with the outside. Axial cavity 74 has a narrowing at its upper end which defines an abutment 80 with a central axial hole 82 having a diameter smaller than the diameter of the ball. Abutment 80 has a diametrical cut 84 engageable by a screwdriver for tightening the valve housing into the base. A filtering net 85 is inserted in axial cavity 74 between the ball and the base to prevent dust or other impurities from entering the valve and consequently affecting its operation.

In the operation, with reference to Fig. 5, item-holding device 10 will be connected to an item-handling machine, such as an anthropomorphic robot or a multi-axis portal (not shown) which, e.g., is arranged at the end of a machining line for carrying out operations such as palletization, de-palletization, packaging, and the like. The machine takes the device above an item P to be drawn, puts the mousse into contact with the item and applies a slight pressure on the mousse that is sufficient to close its cells and consequently to make the mousse substantially airtight. The mousse, in view of its softness and flexibility, easily fits the shape of the item, with a uniform and regular contact with the whole upper surface of the item. By operating pump A, ejector E generates the vacuum by Venturi effect within cavities 58, 60 and within chamber 14, via the aligned holes in the connection box, in the plate and in the beam.

As shown in Fig. 5, those valves 24' which engage the holes obstructed by item P are not operative, because the depression within chamber 14 also spreads into the holes 45 of the mousse, which are insulated from the outer pressure because the item obstructs the holes. On the contrary, those valves 24" which are connected to open holes are operative, because the difference of pressure between the inside of chamber 14 and the outside causes balls 76 to engage abutment 80 and consequently to obstruct axial hole 82, but not by-pass hole 78. Therefore, when the size of the item is such that it does not obstruct all the holes in the mousse, those holes which are not obstructed by the item are closed by the valves, so that the degree of vacuum is not affected and the effectiveness of the device is enhanced. This circumstance leads to the further advantage that the same beam may handle items having different shapes and sizes without loosing efficiency, thereby reducing or even eliminating the need to change the device depending on the item to be handled. As the person skilled in the art will immediately understand, if the valves did not automatically close those holes that are not obstructed by the item, the same degree of vacuum could only be obtained by considerably increasing the power of the pump, with consequent higher consumption of energy. By-pass hole 78 allows a small air stream to be drainined even when the valve is operative, i.e., closed, thereby improving the control of the operation of the valve and allowing the valve to return back to its resting position as soon as chamber 14 is pressurized again.

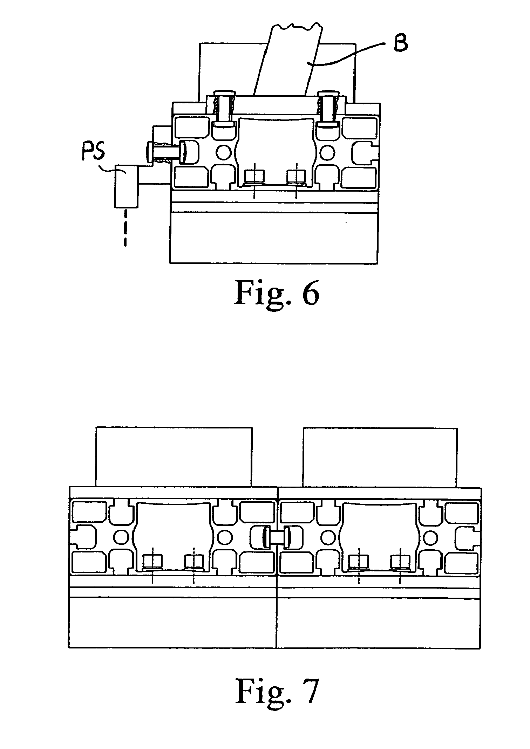

The longitudinal grooves on the profile allow accessory equipment, such as position sensors PS (Fig. 6), to be connected to the device, as well as to firmly connect the device to an arm B of the handling machine (Fig. 6) without being required to drill the profile in the area of the chamber, so that the airtight seal of the chamber is not affected. Moreover, the lateral grooves can be used for laterally coupling a plurality of identical beams (Fig. 7), as well as beams having different lenghts, in order to provide an item-holding platform which properly fits the shape and size of the item to be displaced.

Although a preferred embodiment of the invention has been described herein, of course many changes may be made within the scope of the claims. In particular, the diameter of, and the distance between, the holes in the mousse, as well as the thickness of the latter, may be changed depending on the shape of the item to be displaced.

## Claims

1. An item-holding device (10), caracterized in that it comprises
- a beam (12) in which a longitudinal channel (14) closed at its ends is defined, and which is provided with a first base (12L) having a plurality of holes (23) open to said longitudinal channel (14), and with an opening (A) which is open to the longitudinal channel (14) and to which means (E) for extracting air from the channel are connectable,
- a mousse-holding plate (40) applied to said base of the beam (12) and perforated with holes facing the holes (23) in the first base (12L),
- a mat of a synthetic material glued to the mousse-holding plate (40) and provided with holes (45) aligned to the holes in the mousse-holding plate (40).

2. The device of claim 1, **characterized in that** it comprises a seal (42) arranged between said mousse-holding plate (40) and said first base (12L).

3. The device of claim 2, **characterized in that** said seal is made of a conjugated, ethylene-propylene-dyene monomer material (EPDM).

4. The device of any of claims 1 to 3, **characterized in that** said mousse (44) is made of a conjugated, ethylene-propylene-dyene monomer material (EPDM).

5. The device of claim 4, chatacterized in that sai conjugated, ethylene-propylene-dyene monomer material of the mousse is of the type with semi-closed cells having a higher porosity at rest and a lower porosity when subjected to compression.

6. The device of any of claims 1 to 5, **characterized in that** the opposite lateral sides of the beam each have a longitudinal groove (25, 26) separed from said longitudinal channel (14) and profiled with internally hanging edges.

7. The device of any of claims 1 to 6, **characterized in that** said first base (12L) has a pair of longitudinal grooves (28a, 28b) separed from said longitudinal channel (14) and profiled with internally hanging edges.

8. The device of any of claims 1 to 7, **characterized in that** said beam has a second base (12U) opposite to said first base (12L) and having a pair of longitudinal grooves (30a, 30b) separed from said longitudinal channel (14) and having profiled with internally hanging edges.

9. The device of any of claims 1 to 8, **characterized in that** the mousse-holding plate (40) is fastened to the beam by at least a pair of tie rods (46, 48) passing through the beam (12) outside of the longitudinal channel.

10. The device of any of claims 1 to 9, **characterized in that** said beam has a second base (12U) opposite to said first base, said opening (A) being formed on said second base (12U), and **in that** it comprises a connection box (56) applied to said opposite base and in fluid communication with said longitudinal channel (14) via said opening (A), for connection to said air estraction means (E).

11. The device of any of claims 1 to 10, **characterized in that** it comprises a connection plate (54) which is arranged between said connection box (56) and said second base (12U) and has a hole (55) aligned to the opening (A) on the second, upper base (12U) of the beam (12).

12. The device of any of claims 1 to 11, **characterized in that** each of said holes (23) on the first base (12L) of the beam is engaged by a valve (24) which is switchable between an open position, when the pressures at the opposite sides of the hole (23) are equal, and a substantially closed position when the pressure within the longitudinal channel (14) is lower than the external pressure.

13. The device of claim 12, **characterized in that** each of said valves (24) comprises a valve housing (72) having an axial cylindrical cavity (74) formed therein and provided with a narrowing (84) on the side of the longitudinal channel which defines an abutment (80) surrounding an axial hole (82), in which cavity (74) a ball (76) is slidably received, which ball has a diameter larger than the axial hole (82) and is subjected to the external pressure on one side and to the pressure within the longitudinal channel (14) on the opposite side.

14. The device of claim 13, **characterized in that** the valve housing (72) has a by-pass radial hole (78) via which the axial cavity (74) communicates with said channel (14).
